# EUROPEAN PATENT APPLICATION

(11) **EP 4 525 101 A1**
(43) Date of publication of application: **19.03.2025**
(21) Application number: 23197161.5
(22) Date of filing: 13.09.2023
(51) Int. Cl.: H01M 8/00, H01M 8/1213, H01M 8/1226, H01M 8/1253, H01M 4/88, H01M 4/90, H01M 8/12

(54) **METHOD OF FABRICATING A SOLID OXIDE FUEL CELL AND SOLID OXIDE FUEL CELL**

(71) Applicant: Airbus (S.A.S.), 31700 Blagnac (FR); Airbus Operations GmbH, 21129 Hamburg (DE)
(72) Inventor: Rohr, Oliver, 82024 Taufkirchen (DE); Ahilan, Vignesh, 21129 Hamburg (DE); Vulin, Hugo, 82024 Taufkirchen (DE); Suel, Stéphane, 31700 Blagnac (FR); Walter, Aurelie, 31700 Blagnac (FR)
(74) Representative: Schornack, Oliver

(57) **Abstract**

The present disclosure relates to a method of fabricating a solid oxide fuel cell (100), SOFC. The method comprises applying (S220) an anode slurry coating (120), presintering (S230) the anode slurry coating (120) forming an anode (125, 130) of the SOFC (100), applying (S240) an electrolyte coating (140) and a barrier coating (145) on the anode (130), applying (S250) a cathode coating (150) on the barrier coating (145), and sintering (S255) the anode and the applied electrolyte, barrier and cathode coating. Further disclosed is a correspondingly fabricated SOFC (100).

## Description

The present disclosure generally relates to a method of fabricating a solid oxide fuel cell and a corresponding fuel cell. Particularly, the present disclosure relates to a method of fabricating a solid oxide fuel cell including pre-sintering an anode slurry coating and applying an electrolyte, barrier and cathode coating sintered onto the anode. The present disclosure further relates to a solid oxide fuel cell manufactured by such method.

Fuel cell systems become more and more important power supplies in stationary as well as mobile applications requiring electric power. The fuel cells can include polymer membrane fuel cells, which can operate at lower temperatures, particularly below 200°C, as well as solid fuel cells (e.g., solid oxide fuel cells, SOFC), which operate at higher temperatures, particularly between 500°C and 1000°C.

SOFCs provide a high electrical and thermal energy efficiency, with a high fuel utilisation up to 85%. An oxygen reduction reaction occurs in a porous cathode of the SOFC by accepting electrons and producing oxide ions which transfer through a gas tight electrolyte to an anode interface. The hydrogen fuel gets oxidised at the anode interface by accepting the oxide ions and producing electrons, which pass to the cathode side through an external circuit.

The electrolyte (layer) provides mechanical stability to the SOFC, which is necessary, particularly due to thermal stress. Thus, a thick electrolyte is desirable from a mechanical standpoint. However, the ohmic resistance of the electrolyte is high, particularly in case of a thick electrolyte layer.

It is therefore an object of the present disclosure to provide a method of fabricating a lightweight fuel cell, while still having a high gravimetric power density, and further to provide such lightweight fuel cell.

This object is solved by the present invention as defined in the independent claims. Preferred embodiments are defined by the dependent claims.

According to a first aspect to better understand the present disclosure, a method of fabricating a solid oxide fuel cell, SOFC, comprises applying an anode slurry coating, pre-sintering the anode slurry coating forming an anode of the SOFC, and applying an electrolyte coating and a barrier coating on the anode. Thus, an anode supported fuel cell can be fabricated, which offers considerable mechanical strength for the fuel cell due to the anode material. At the same time, the pre-sintered anode provides the opportunity of having only a thin electrolyte part.

The method further comprises applying a cathode coating on the barrier coating, and sintering the anode and the applied electrolyte, barrier and cathode coating. The anode supported fuel cell allows a weight reduction of the entire cell compared, for example, with an electrolyte supported cell or a planar SOFC.

In an implementation variant, the pre-sintering of the anode slurry coating is performed with a temperature between 800°C and 1200°C, preferably at 1000°C. As a mere example, the anode slurry coating can be heated from ambient temperature (room temperature) to 1000°C with a heating rate of 0.5°C/min. Furthermore, the temperature of 1000°C can be maintained for 1.5 to 2.5 hours, preferably 2 hours. Thereafter, the pre-sintered anode may cool down naturally to room temperature, i.e. in an environment at room temperature.

In another implementation variant, the method can further comprise applying a current collector coating on the cathode coating, and sintering the current collector coating. The current collector coating allows a better electric connectivity.

In an implementation variant, the sintering after applying the current collector is performed at a temperature between 100°C and 900°C, preferably at 100°C and 800°C. As a mere example, after applying the current collector coating, the temperature is raised from room temperature to 100°C with a heating rate of 0.5°C/min (i.e., in 200 minutes). The temperature of 100°C is held for 1 hour and is then further increased to 800°C at 1°C/min (i.e., in 700 minutes). After 1 hour of sintering at 800°C, the sample is cooled down to room temperature with a cooling rate of 3°C/min.

In a further implementation variant, the method can further comprise co-sintering the electrolyte coating and the barrier coating before applying the cathode coating. The electrolyte and barrier coating allow decreasing of the ohmic resistance of the electrolyte and further provides a dense structure preventing a gas leakage, i.e., the electrolyte layer is gas tight, and at the same time provides a high structural stability.

In an implementation variant, the co-sintering is performed at a temperature between 600°C and 1500°C, preferably at 600°C, 850°C and 1350°C. As a mere example, the co-sintering is performed in several steps, starting with heating from room temperature to 600°C with a heating rate of 0.6°C/min (i.e., for approximately 1000 minutes). The temperature of 600°C is held for 1 hour, which allows removing a binder and organic components present in the electrolyte and/or barrier coating. Thereafter, the temperature is increased to 850°C with a heating rate of 3.3°C/min (i.e., in about 75 minutes). This temperature is held for 15 minutes, subsequently raised to 1350°C with a heating rate of 10°C/min (i.e., in about 50 minutes), and held at 1350°C for 3 hours. After sintering, the sample is cooled down to room temperature at a cooling rate of 3°C/min.

In another implementation variant, the sintering of the cathode coating, i.e. the sintering after applying the cathode coating (but before applying a current collector coating), is performed at a temperature between 600°C and 1100°C, preferably at 600°C and 950°C. As a mere example, the sintering of the cathode coating is performed in several steps, starting with heating from room temperature to 600°C with a heating rate of 0.6°C/min (i.e., for approximately 1000 minutes). The temperature of 600°C is held for 1 hour, which allows removing a binder and organic components present in cathode coating. Thereafter, the temperature is increased to 950°C with a heating rate of 1°C/min (i.e., in about 350 minutes), and is held for 1 hour. After sintering, the sample is cooled down to room temperature at a cooling rate of 3°C/min.

In yet another implementation variant, the method can further comprise drying the anode slurry coating for at least 12 hours, preferably at least 24 hours, before pre-sintering the anode slurry coating. The drying of the anode slurry coating can be performed at room temperature and in regular air.

In a further implementation variant, the method can further comprise laser cutting the pre-sintered anode at at least one edge of the anode. This allows removing portions of the anode having cracks or similar defects in a region close to the edge. Such cracks can result from the pre-sintering.

In yet a further implementation variant, the method can further comprise providing a graphite mould. The applying of the anode slurry coating can then be performed onto the graphite mould. This allows providing a cost-effective mould.

Furthermore, the graphite mould can be configured to disintegrate during the pre-sintering. Thus, while the anode slurry coating is pre-sintered and becomes more rigid, the graphite mould disintegrates and can be removed, so that any further fabrication steps can be performed solely with the pre-sintered anode.

In another implementation variant, the graphite mould is a graphite rod having a substantially circular cross-section, and the SOFC is a tubular fuel cell. Such tubular SOFC provides for a high gravimetric power density.

In yet another implementation variant, each of the applying steps of the fabrication method can be performed by dipping. As a mere example, a slurry dip coating can be performed to apply the respective coating, i.e., the respective slurry layer.

In an implementation variant, each of the coatings can have a specific composition. For instance:
- the anode slurry coating can contain NiO-YSZ, preferably NiO-8YSZ; and/or
- the electrolyte coating contains YSZ, preferably 8YSZ, including Y2O3 and ZrO2; and/or
- the barrier coating contains GDC, preferably Gd, Ce and O; and/or
- the cathode coating contains LSC, preferably La, Sr, Co, and O; and/or
- the current collector coating contains silver.

In another implementation variant, the anode slurry coating can be made from the following components having the respective given proportion (relative to the entire sum of components): adding NiO-8YSZ powder (53.5 to 59.5 %, preferably 56.7%) to ethanol (33.4 to 37%, preferably 35.2%) containing Triton X (1.3 to 1.6%, preferably 1.46%), stirring the suspension for 30 minutes, solubilising polyvinyl butyral (PVB; such as Butvar B-98) (3.5 to 4.3%, preferably 3.9%) in ethanol including heating between 45 to 50°C and stirring the PVB solution for 30 minutes, adding the PVB solution to the NiO/YSZ suspension under stirring and mixing for 30 minutes, adding polyethylene glycol (PEG) 400 (1.3 to 1.6%, preferably 1.46%) and Dioctyl phthalate (DOP) (1.15 to 1.45%, preferably 1.3%), mixing the slurry for 30 minutes, and mixing the slurry at a high-speed, preferably at 5000 to 7000 rpm, most preferably at 6000 rpm, for 5 minutes.

As a mere example, the anode slurry coating can be made by adding the following components with the respective proportionate weights: 165 to 183 g, preferably 172 to 176 g, most preferably 174 g of NiO-8YSZ powder to 45 to 55 g, preferably 50 g of ethanol containing 4 to 5 g, preferably 4.2 to 4.8 g, most preferably 4.5 g Triton X, stirring the suspension for 30 minutes, solubilising 11 to 13 g, preferably 11.5 to 12.5 g, most preferably 12 g of Polyvinyl Butyral (PVB; such as Butvar B-98) in 52 to 64 g, preferably 55 to 61 g, most preferably 58 g of ethanol including heating between 45 to 50°C and stirring the PVB solution for 30 minutes, adding the PVB solution to the NiO/YSZ suspension under stirring and mixing for 30 minutes, adding 4 to 5 g, preferably 4.2 to 4.8 g, most preferably 4.5 g of polyethylene glycol (PEG) 400 and 4 to 5 g, preferably 4.2 to 4.8 g, most preferably 4.5 g of Dioctyl phthalate (DOP), mixing the slurry for 30 minutes, and mixing the slurry at a high-speed, preferably at 5000 to 7000 rpm, most preferably at 6000 rpm, for 5 minutes.

In yet another implementation variant, the electrolyte slurry coating can be made from the following components having the respective given proportion (relative to the entire sum of components): adding Y₂O₃-ZrO₂ 8YSZ-PSD(d50) powder (18 to 22%, preferably 20%) to ethanol absolute (EtOH) (71 to 87%, preferably 78.9%), Fish oil menhaden (MFO) (0.16 to 0.19%, preferably 0.18%) and Polyvinyl Butyral (PVB; such as Butvar B-98) (0.8 to 1%, preferably 0.9%), and stirring the suspension for 3 hours. Such slurry allows forming a thin electrolyte layer that is still gas tight.

As a mere example, the electrolyte slurry coating can be made by adding the following components with the respective proportionate weights: adding 10 to 12 g, preferably 10.5 to 11.5 g, most preferably 11 g of Y₂O₃-ZrO₂ 8YSZ-PSD(d50) powder to 49 to 61 ml, preferably 52 to 58 ml, most preferably 55 ml of ethanol absolute (EtOH), 0.09 to 0.11 g, preferably 0.1 g Fish oil menhaden (MFO) and 0.45 to 0.55 gram, preferably 0.5 g of polyvinyl butyral Butvar (PVB), and stirring the suspension for 3 hours.

According to a second aspect to better understand the present disclosure, a solid oxide fuel cell, SOFC, manufactured by the method of the first aspect or one of its variants comprises an anode having a thickness between 200 and 500 µm, preferably 350 µm, an electrolyte having a thickness between 6 and 10 µm, preferably 8 µm, a barrier layer having a thickness between 1 and 5 µm, preferably 3.5 µm, and a cathode having a thickness between 15 and 25 µm, preferably 20 µm.

In an implementation variant, the fuel cell can further comprise a silver current collector having a thickness between 6 and 14 µm, preferably 10 µm.

in another implementation variant, the SOFC has a tubular body. As a mere example, the anode can have a length of 40 to 60 mm, preferably 50 mm, and/or the electrolyte can have a length of 30 to 50 mm, preferably 40 mm, and/or the barrier layer can have a length of 30 to 50 mm, preferably 40 mm, and most preferably can have the same length as the electrolyte, and/or the cathode can have a length of 20 to 40 mm, preferably 30 mm, and/or the silver current collector can have a length of 20 to 40 mm, preferably 30 mm, and most preferably can have the same length as the cathode.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a cross-section of an exemplary fuel cell and a detail of a portion thereof;
- Figure 2: schematically illustrates steps of fabricating an exemplary fuel cell;
- Figure 3: schematically illustrates a flow diagram of a method of fabricating a fuel cell;
- Figure 4: illustrates a microscope image of a layer build-up of a fuel cell; and
- Figure 5: illustrates a microscope image of a portion of the layer build-up of Figure 4 with greater magnification.

In the following description, for purposes of explanation and not limitation, specific details are set forth in order to provide a thorough understanding of the present disclosure. It will be apparent to one skilled in the art that the present disclosure may be practiced in other implementations that depart from these specific details.

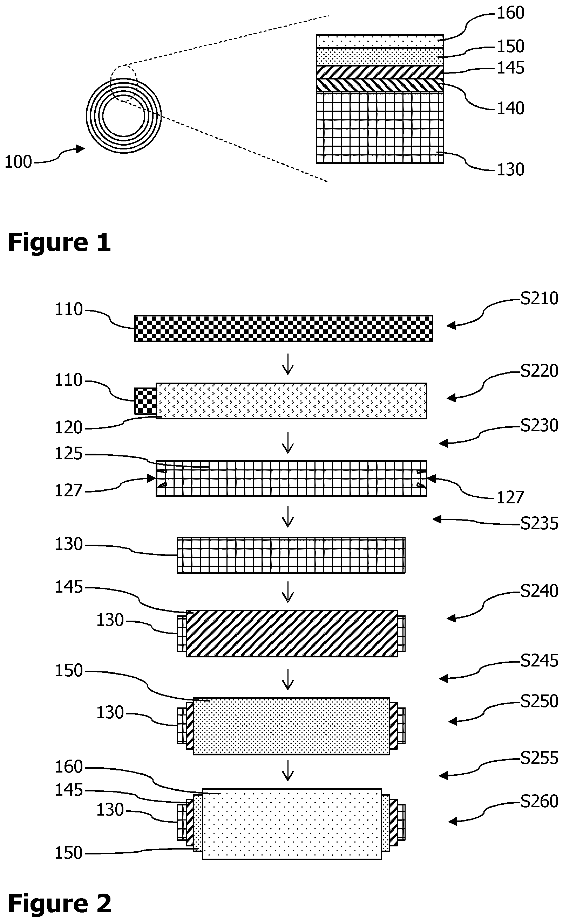

Figure 1 schematically illustrates a cross-section of an exemplary fuel cell 100 and a detail of a portion thereof. The exemplary fuel cell 100 is a solid oxide fuel cell 100 having an annular shape. The cross-section of the SOFC 100 includes an innermost body forming an anode 130. The anode 130 is covered (on its outside) by an electrolyte layer 140 followed by a barrier layer 145. The barrier layer 145 is surrounded on its outside by a cathode layer 150. At least on portions of the cathode layer 150 there may be provided a current collector 160.

The anode can be made from or can contain NiO-YSZ (Nickel oxide - Yttria-stabilized zirconia), particularly NiO-8YSZ (with 8 mol% Y₂O₃ fully stabilized ZrO₂), the electrolyte layer 140 can be made from or can contain YSZ, the barrier layer 145 can be made from or can contain GDC (Gadolinium-doped ceria), the cathode layer 150 can be made from or can contain LSC (Lanthanum Strontium Cobaltite), and the current collector 160 can be made from or can contain silver.

Figure 2 schematically illustrates steps of fabricating an exemplary SOFC 100. Specifically, for fabricating an annular SOFC, a graphite rod 110 is dipped in an NiO-8YSZ slurry, so that a slurry dip coating 120 at years to the graphite rod 110. During pre-sintering the graphite rod 110 disintegrates and leaves a preliminary anode 125. Such preliminary anode 125 may have cracks 127 or other defects were particularly in an edge region. Such cracks 127 or other defects can be removed by laser cutting the preliminary anode 125 along its edges.

The cut anode 130 is then dip coated twice with a slurry, so that an electrolyte coating 140 and a barrier coating 145 are formed on the anode 130. Figure 2 only illustrates the outer barrier coating 145, as it mainly covers the electrolyte coating 140.

After co-sintering the electrolyte and barrier coatings 140, 145, a cathode coating 150 is applied. The cathode coating 150 can again be hardened by sintering.

Finally, a current collector coating 160 can be applied, by dipping, painting, ink printing or the like. After a final sintering the SOFC 100 is fully fabricated.

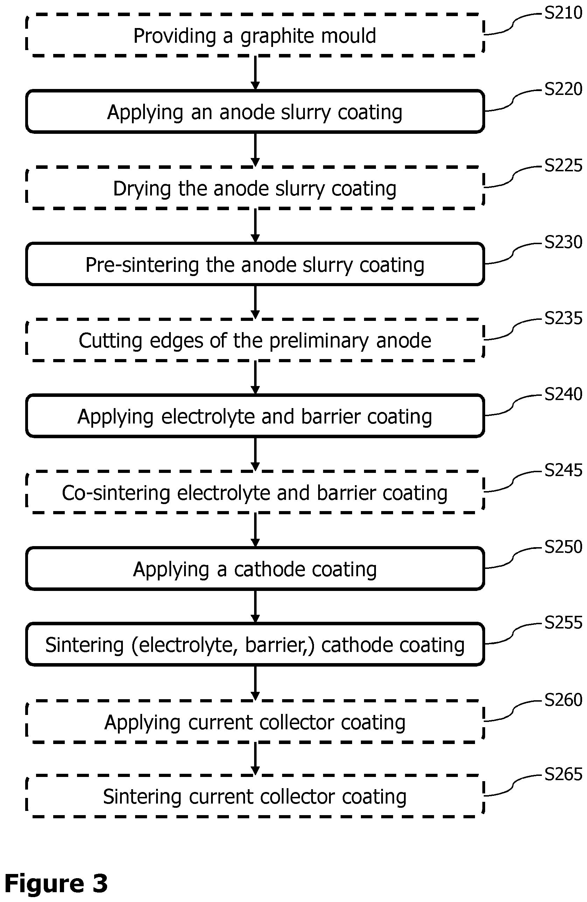

Figure 3 schematically illustrates a flow diagram of a method of fabricating a fuel cell, particularly an annular SOFC 100. The method steps illustrated in Figure 3 are also indicated in the flow illustrated in Figure 2 for comparability of both drawings.

Specifically, the method includes applying in step S220 an anode slurry coating 120, that is, in step S230, pre-sintered to form a (preliminary) anode 125, 130. Furthermore, in step S240, an electrolyte coating 140 and a barrier coating 145 are applied. Thereafter, cathode coating 150 is applied in step S250. The applying of the coatings 120, 140, 145 can be performed by slurry dipping. Thereafter, the applied electrolyte, barrier and cathode coating 140, 145, 150 on the anode 125, 130 is sintered in a step S255.

The method can include several optional steps, which are illustrated in dashed lines in Figure 3.

This includes, in step S210, providing a graphite mould 110 that is configured to disintegrate during the pre-sintering (step S230). The graphite mould 110 can be used to apply the anode slurry coating 120 thereon in step S220, for example, by slurry dipping.

Furthermore, in step S225, the anode slurry coating 120 can be dried for at least 12 hours, preferably at least 24-hour is in air. The drying can be performed at room temperature. As indicated above with respect to Figure 2, if any cracks 127 or other defects are present, in step S235, at least one edge of the present third anode 125 can be cut, for example employing laser cutting.

Moreover, in step S245, the electrolyte coating 140 and the barrier coating 145 can be co-sintered before applying the cathode coating 150.

At the end, in step S260, a current collector coating can be applied to the cathode coating/layer 150. This applying can be performed by painting, ink printing, dipping or the like. The current collector coating 160 can be sintered in step S265.

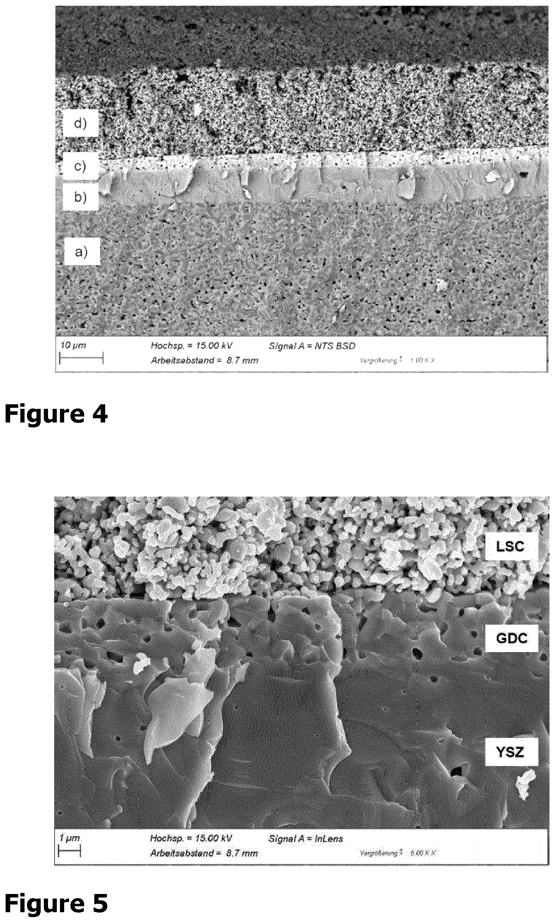

Figure 4 illustrates a microscope image of a layer build-up of a fuel cell 100 fabricated by the method of Figure 3. Particularly, the image (photograph) is made with a scanning electron microscope (SEM) and shows a portion of the anode 130 (indicated by a)), an approximately 8 µm thick 8YSZ film forming the electrolyte layer 140 (indicated by b)), followed by the approximately 3.5 µm thick GDC barrier layer 145 (indicated by c)), and the approximately 20 µm thick LSC cathode layer 150 (indicated by d)). The dark component at the top of Figure 4 is a portion of the silver current collector.

Figure 5 illustrates another microscope image of a portion of the layer build-up of Figure 4 with greater magnification (e.g., mag. 5000x), and was also made by an SEM. Figure 5 shows the morphology of the coating system, particularly of the electrolyte layer 140 (YSZ), the barrier layer 145 (GDC), and the cathode layer 150 (LSC).

### Example

The following example shows possible mixtures to compose the respective slurry, in order to fabricate an annular SOFC 100.

### Materials

The SOFC 100 is made by slurry dip-coating. The exemplary materials and their respective proportion relative to the entire slurry (a preferred range and a specific example) are summarized in table 1 below:

**Table 1: Used materials for slurry preparation (proportionate percentage ranges; and specific exemplary percentage value).**

| **Layer** | **Powder** | **Solvent** | **Dispersant** | **Binder** | **Plasticizer** | **Plasticizer** | **Substrate** |
|---|---|---|---|---|---|---|---|
| Anode | NiO-8YSZ (60:40), PSD(d50) = 0.466 µm, BET = 7.785 m2/g (**53.5 to 59.5 %; 56.67%)** (a) | Ethanol absolute (EtOH) (**33.4 to 37%; 35.17%)** (b) | Triton^{™} X-100 (**1.3 to 1.6%; 1.46%)** (b) | Polyvinyl butyral Butvar B-98 (PVB) (**3.5 to 4.3%; 3.9%)** (b) | Dioctyl Phthalate (DOP) (**1.15 to 1.45%; 1.3%)** (b) | Polyethylene glycol MW 400 (PEG400) (**1.3 to 1.6%; 1.46%)** (c) | Graphite rod ∅ 6.15 mm, 152 mm long, 99.9% metal basis (c) |
| Electrolyte | (Y₂O₃) _{0.08} (ZrO₂) _{0.92} (8YSZ), PSD(d50) = 0.220 µm, BET = 10.299 m2/g **(18 to 22%; 20%)** (a) | Ethanol absolute (EtOH) **(75 to 83%; 78.90%)** (b) | Fish oil from menhaden (MFO) **(0.16 to 0.19%; 0.18%)** (b) | Polyvinyl butyral Butvar B-98 (PVB) **(0.8 to 1%; 0.9%)** (d) | / | / | NiO/YSZ tubes pre-sintered at 1000°C |
| Barrier layer | Gd_{0.1}Ce_{0.9}O_{1.95} (GDC), PSD(d50) = 0.20 µm), BET = 10.103m₂/g (**11.8 to 14.5%; 13.19%)** (a) | Ethanol absolute (EtOH) (**81 to 90%; 85.43%)** (b) | Fish oil from menhaden (MFO) (**0.35 to 0.43%; 0.39%)** (b) | Polyvinyl butyral Butvar B-98 (PVB) (**0.88 to 1.08%; 0.98%)** (d) | / | / | 24 h drying green YSZ layer |
| Cathode | La_{0.6}Sr_{0.4}CoO₃ (LSC), PSD(d50) = 0.52 µm), BET = 6.85m₂/g (**43 to 48%; 45.49%**) (a) | Ethanol absolute (EtOH) (**42 to 47.5%; 44.87%)** (b) | Fish oil from menhaden (MFO) (**2.4 to 3%; 2.72%)** (b) | Polyvinyl butyral Butvar B-98 (PVB) (**6.1 to 7.5%; 6.82%)** (d) | Polyethylene glycol MW 200 (PEG200) (**0.07 to 0.09%; 0.079%)** (b) | / | Sintered GDC |

| | | | | | | | |
|---|---|---|---|---|---|---|---|
| (a): Kceracell, (b): Sigma Aldrich, (c): Alfa Aesar, (d): Acros organics | | | | | | | |

As a further example, the following table 2 shows ranges of weight, and one specific weight value, for each component to compose the respective slurry:

**Table 2: Used materials for slurry preparation (ranges of weight; plus specific exemplary weight).**

| **Layer** | **Powder** | **Solvent** | **Dispersant** | **Binder** | **Plasticizer** | **Plasticizer** | **Substrate** |
|---|---|---|---|---|---|---|---|
| Anode | NiO-8YSZ (60:40), PSD(d50) = 0.466 µm), BET = 7.785 m2/g (**165 to 183 g; 174 g**) (a) | Ethanol absolute (EtOH) **(102 to 114 g; 108 g**) (b) | Triton^{™} X-100 **(4 to 5 g; 4.5 g)** (b) | Polyvinyl butyral Butvar B-98 (PVB) (**10.8 to 13.2 g; 12 g)** (b) | Dioctyl Phthalate (DOP) (**3.6 to 5.5 g; 4-5 g**) (b) | Polyethylene glycol MW 400 (PEG400) **(4 to 5 g; 4.5 g)** (c) | Graphite rod ∅ 6.15 mm, 152 mm long, 99.9% metal basis (c) |
| Electrolyte | (Y₂O₃) _{0.08} (ZrO₂) _{0.92} (8YSZ), PSD(d50) = 0.220 µm, BET = 10.299 m₂/g (**9.9 to 12.1 g; 11 g**) (a) | Ethanol absolute (EtOH) **(52 to 58 ml; 55 ml**) (b) | Fish oil from menhaden (MFO) **(0.09 to 0.11 g; 0.1 g**) (b) | Polyvinyl butyral Butvar B-98 (PVB) (**0.45 to 0.55 g; 0.5g**) (d) | / | / | NiO/YSZ tubes pre-sintered at 1000°C |
| Barrier layer | Gd_{0.1}Ce_{0.9}O_{1.95} (GDC), PSD(d50) = 0.20 µm), BET = 10.103m₂/g (**6 to 7.4 g; 6.7 g**) (a) | Ethanol absolute (EtOH) **(52 to 58 ml; 55 ml**) (b) | Fish oil from menhaden (MFO) (**0.18 to 0.22 g; 0.2 g)** (b) | Polyvinyl butyral Butvar B-98 (PVB) (**0.45 to 0.55 g; 0.5q)** (d) | / | / | 24 h drying green YSZ layer |
| Cathode | La_{0.6}Sr_{0.4}CoO₃ (LSC), PSD(d50) = 0.52 µm), BET = 6.85m₂/g **(38 to 42 g; 40 g**) (a) | Ethanol absolute (EtOH) **(47.5 to 52.5 ml; 50 ml**) (b) | Fish oil from menhaden (MFO) (**2.1 to 2.7 g; 2.4 g)** (b) | Polyvinyl butyral Butvar B-98 (PVB) (**5.4 to 6.6 g; 6 g**) (d) | Polyethylene glycol MW 200 (PEG200) **(0.06 to 0.08 g; 0.07 g)** (b) | / | Sintered GDC |

| | | | | | | | |
|---|---|---|---|---|---|---|---|
| (a): Kceracell, (b): Sigma Aldrich, (c): Alfa Aesar, (d): Acros organics | | | | | | | |

### Anode tube (120-130) manufacturing

With reference to the above table 2 and its specific weight values, 174 g of NiO-8YSZ powder was added to 50 g of the ethanol containing 4.5 g Triton X. The Suspension was magnetically stirred for 30 minutes at high speed (for example, at 4000-6000rpm). In parallel, 12 g of PVB was solubilized in 58 g of ethanol. The mixture was slightly heated between 45 - 50° C using a hot water bath for complete solubilisation of the PVB. The PVB solution was magnetically stirred for 30 minutes.

Then, the PVB solution was added to the NiO/YSZ suspension under magnetic stirring. The mixture was stirred for 30 minutes before adding 4.5 g of PEG 400 and 4.5 g of DOP. The slurry was magnetically stirred for another 30 minutes and then mixed at high speed (6000 rpm) for 5 minutes using an Ultra Turrax. The slurry 120 was then kept in the fridge before use and mixed again at high speed for 5 min (6000 rpm) shortly before use.

A graphite rod 110 was dipped (S220) for 15 seconds in a NiO-8YSZ slurry prepared according to the procedure described above. The deposited layer 120 was redrawn at a 125 mm/min speed. The deposit layer 120 was dried in the air for 10 minutes. The deposition cycle (S220) was repeated 12 times in order to reach the desired anode thickness. The anode support was dried in air (S225) for more than 24 h before a pre-firing step (S230). The support 110, 120 was heated from ambient temperature to 1000 °C using a heating rate of 0.5 °C/min, the temperature was then maintained at 1000 °C for 2 h and finally the support 125 was allowed to naturally cool down to room temperature.

### Substrates pre-treatment

The NiO-8YSZ pre-sintered tubes 125 are cut (S235) by a laser (Rofin Powerline E 25, short Pulsed IR Laser (25 W) 1064 nm) to adjust the tube length and remove the cracked edges 127.

Masking is made prior to each deposition using a high viscosity PVA (Polyvinyl alcohol, Mowiol^{®} 4-88, m_{w} = 31000, Sigma Aldrich) suspension prepared by dissolution of PVA in hot water under magnetic stirring. Short before slurry dip-coating (S220, S240), the substrates are cleaned with ethanol and then treated in air plasma (0.2 mbar, 1000 W, 1 min) to improve the wettability. For YSZ and GDC coating 140, 145 deposition (S240), there is an additional wetting step with ethanol prior to deposition.

### Slurry dip-coating

The 8YSZ, GDC and LSC slurry compositions 120, 140, 145 are available in Tables 1 and 2. The 8YSZ and GDC slurries 120, 140 are mixed using magnetic stirring for 3 h. This stirring is followed by a high speed mixing at 1300 rpm for 5 min (Hauschild, DAC 150 FVZ) in order to achieve a better dispersion and homogeneity of the suspensions. 8YSZ and GDC slurries 120, 140 are allowed to settle for 30 minutes before starting the deposition (S220, S240) in order to allow sedimentation of hypothetical agglomerates. For both 8YSZ and GDC slurries 120, 140 two coating cycles (S220, S240) are performed with an immersion time of 30 sec. The withdrawal speed is 20 cm/min and the drying time between the two cycles is 120 sec. For the LSC layer 145 deposition (S240), the substrate is dipped once during 30 sec. The withdrawal speed is 6 cm/min. The thin silver current collection layer 160 (Fuelcellstore, Silver SOFC ink) is painted on the sintered LSC cathode area 150 using a brush.

### Sintering of coatings

The 8YSZ electrolyte film 140 and the GDC barrier layer 145 applied (S240) on the pre-sintered anode tube (125, 130) are co-sintered (S245) at 1350°C for 3 hours. The sintering (S245) is performed in several steps: heating from RT to 600 °C in approx. 1000 min. (0.6 °C/min heating rate). The 600 °C is held for 1 hour to remove the binder and other organic components. Then the temperature is increased to 850 °C in 75 min (3.3 °C/min), held for 15 min and subsequently raised in 50 min (10 °C/min) to 1350 °C which is held for 3 hours. Afterward, the samples are cooled to room temperature (RT) at 3 °C/min.

The LSC cathode layer 150 is sintered (S250) at 950 °C for 1 hour. The same debindering step as before is used followed by an increase to 950 °C in 350 min (1°C/min). The controlled cooling to RT uses a cooling rate of 3 °C/min.

The silver layer 160 is sintered (S265) at 800 °C for 1 hour. The temperature is raised from RT to 100 °C in approx. 200 min. (0.5 °C/min), held there for 1 hour and is then further increased to 800 °C in 700 min (1 °C/min). After 1 hour sintering at 800 °C the samples 100 are cooled down to RT at a cooling rate of 3 °C/min.

An increase of the heating rate can reduce porosity of 8YSZ layers 120, 140 at constant sintering temperature. This result was extrapolated to GDC 145 and appeared to be valid.

### Surface morphology and microstructure analysis

An overview of the layer build-up is shown in the SEM image of Figure 4. The SEM image is taken in material contrast mode.

The coating system is composed of an approx. 8 µm thick 8YSZ film 140 (Figure 4, b) on top of the NiO-8YSZ anode tube 130 (Figure 4, a) followed by the approx. 3.5 µm thick GDC barrier layer 145 (Figure 4, c) and the approx. 20 µm thick LSC cathode layer 150 (Figure 4, d).

Figure 5 shows the morphology of the coating system at higher magnification of mag. 5000 x. The 8YSZ electrolyte film 140 has isolated closed pores and is close to full density. The GDC barrier layer 145 shows some pores. However, these are closed pores which should lead to an effective separation between the electrolyte film 140 and the cathode layer 150. The LSC layer 150 shows a porosity of approx. 40 %. The porosity is estimated by image processing software.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method of fabricating a solid oxide fuel cell (100), SOFC, the method comprising:
applying (S220) an anode slurry coating (120);
pre-sintering (S230) the anode slurry coating (120) forming an anode (125, 130) of the SOFC (100);
applying (S240) an electrolyte coating (140) and a barrier coating (145) on the anode (130);
applying (S250) a cathode coating (150) on the barrier coating (145); and
sintering (S255) the anode and the applied electrolyte, barrier and cathode coating.

2. The method of claim 1, wherein the pre-sintering (S230) of the anode slurry coating (120) is performed with a temperature between 800°C and 1200°C, preferably at 1000°C.

3. The method of claim 1 or 2, further comprising:
applying (S260) a current collector coating (160) on the cathode coating (150); and
sintering (S265) the current collector coating (160),
wherein, preferably, the sintering (S265) is performed at a temperature between 100°C and 900°C, preferably at 100°C and 800°C.

4. The method of one of claims 1 to 3, further comprising:
co-sintering (S245) the electrolyte coating (140) and the barrier coating (145) before applying the cathode coating (150), wherein, preferably, the co-sintering (S245) is performed at a temperature between 600°C and 1500°C, preferably at 600°C, 850°C and 1350°C.

5. The method of one of claims 1 to 4, wherein the sintering (S255) after applying the cathode coating (150) is performed at a temperature between 600°C and 1100°C, preferably at 600°C 950°C.

6. The method of one of claims 1 to 5, further comprising:
drying (S225) the anode slurry coating (120) for at least 12 hours, preferably at least 24 hours, before pre-sintering the anode slurry coating (140, 145); and/or
laser cutting (S235) the pre-sintered anode (125) at at least one edge (127) of the anode (125).

7. The method of one of claims 1 to 6, further comprising:
providing (S210) a graphite mould (110),
wherein the applying (S220) of the anode slurry coating (120) is performed onto the graphite mould (110), and
wherein the graphite mould (110) is configured to disintegrate during the pre-sintering (S230).

8. The method of claim 7, wherein the graphite mould (110) is a graphite rod having a substantially circular cross-section, and the SOFC (100) is a tubular fuel cell, and
wherein, preferably, each of the applying (S220, S240, S250, S260) is performed by dipping, particularly slurry dip coating.

9. The method of one of claims 1 to 8, wherein:
the anode slurry coating (120) contains NiO-YSZ, preferably NiO-8YSZ, and/or
the electrolyte coating (140) contains YSZ, preferably 8YSZ, including Y2O3 and ZrO2, and/or
the barrier coating (145) contains GDC, preferably Gd, Ce and O, and/or
the cathode coating (150) contains LSC, preferably La, Sr, Co, and O, and/or
the current collector coating (160) contains silver.

10. A solid oxide fuel cell (100), SOFC, manufactured by the method of one of claims 1 to 9, the fuel cell (100) comprising:
an anode (130) having a thickness between 200 and 300 µm, preferably 350 µm;
an electrolyte (140) having a thickness between 5 and 8 µm, preferably 8 µm;
a barrier layer (145) having a thickness between 1 and 3 µm, preferably 3.5 µm; and
a cathode (150) having a thickness between 10 and 25 µm, preferably 20 µm.

11. The fuel cell (100) of claim 10, further comprising:
a silver current collector (160) having a thickness between 6 and 14 µm, preferably 10 µm.

12. The fuel cell (100) of claim 11, wherein the SOFC (100) has a tubular body, and wherein:
the anode (130) has a length of 40 to 60 mm, preferably 50 mm; and/or
the electrolyte (140) has a length of 30 to 50 mm, preferably 40 mm; and/or
the barrier layer (145) has a length of 30 to 50 mm, preferably 40 mm, and most preferably has the same length as the electrolyte (140); and/or
the cathode (150) has a length of 20 to 40 mm, preferably 30 mm; and/or
the silver current collector (160) has a length of 20 to 40 mm, preferably 30 mm, and most preferably has the same length as the cathode (150).

## Amended claims

### Amended claims in accordance with Rule 137(2) EPC.

1. A method of fabricating an anode-supported, tubular solid oxide fuel cell (100), SOFC, the method comprising:
applying (S220) an anode slurry coating (120);
pre-sintering (S230) the anode slurry coating (120) forming a tubular anode (125, 130) of the SOFC (100);
applying (S240) an electrolyte coating (140) and a barrier coating (145) on the anode (130) by slurry dip coating;
applying (S250) a cathode coating (150) on the barrier coating (145); and
sintering (S255) the anode and the applied electrolyte, barrier and cathode coating,
wherein the tubular anode has a thickness between 200 and 500 µm, and the electrolyte has a thickness between 6 and 10 µm.

2. The method of claim 1, wherein the pre-sintering (S230) of the anode slurry coating (120) is performed with a temperature between 800°C and 1200°C, preferably at 1000°C.

3. The method of claim 1 or 2, further comprising:
applying (S260) a current collector coating (160) on the cathode coating (150); and
sintering (S265) the current collector coating (160),
wherein, preferably, the sintering (S265) is performed at a temperature between 100°C and 900°C, preferably at 100°C and 800°C.

4. The method of one of claims 1 to 3, further comprising:
co-sintering (S245) the electrolyte coating (140) and the barrier coating (145) before applying the cathode coating (150), wherein, preferably, the co-sintering (S245) is performed at a temperature between 600°C and 1500°C, preferably at 600°C, 850°C and 1350°C.

5. The method of one of claims 1 to 4, wherein the sintering (S255) after applying the cathode coating (150) is performed at a temperature between 600°C and 1100°C, preferably at 600°C 950°C.

6. The method of one of claims 1 to 5, further comprising:
drying (S225) the anode slurry coating (120) for at least 12 hours, preferably at least 24 hours, before pre-sintering the anode slurry coating (140, 145); and/or
laser cutting (S235) the pre-sintered anode (125) at at least one edge (127) of the anode (125).

7. The method of one of claims 1 to 6, further comprising:
providing (S210) a graphite mould (110),
wherein the applying (S220) of the anode slurry coating (120) is performed onto the graphite mould (110), and
wherein the graphite mould (110) is configured to disintegrate during the pre-sintering (S230).

8. The method of claim 7, wherein the graphite mould (110) is a graphite rod having a substantially circular cross-section, and
wherein, preferably, each of the applying (S220, S240, S250, S260) is performed by dipping, particularly slurry dip coating.

9. The method of one of claims 1 to 8, wherein:
the anode slurry coating (120) contains Nickel oxide - Yttria-stabilized zirconia, NiO-YSZ, preferably NiO-8YSZ, and/or
the electrolyte coating (140) contains Yttria-stabilized zirconia, YSZ, preferably 8YSZ, including Y2O3 and ZrO2, and/or
the barrier coating (145) contains Gadolinium-doped ceria, GDC, preferably Gd, Ce and O, and/or
the cathode coating (150) contains Lanthanum Strontium Cobaltite, LSC, preferably La, Sr, Co, and O, and/or
the current collector coating (160) contains silver.

10. An anode-supported, tubular solid oxide fuel cell (100), SOFC, manufactured by the method of one of claims 1 to 9, the fuel cell (100) comprising:
a barrier layer (145) having a thickness between 1 and 3 µm, preferably 3.5 µm; and
a cathode (150) having a thickness between 10 and 25 µm, preferably 20 µm,
wherein, preferably, the anode (130) has a thickness of 350 µm, and further preferably, the electrolyte (140) has a thickness of 8 µm.

11. The fuel cell (100) of claim 10, further comprising:
a silver current collector (160) having a thickness between 6 and 14 µm, preferably 10 µm.

12. The fuel cell (100) of claim 11, wherein:
the anode (130) has a length of 40 to 60 mm, preferably 50 mm; and/or
the electrolyte (140) has a length of 30 to 50 mm, preferably 40 mm; and/or
the barrier layer (145) has a length of 30 to 50 mm, preferably 40 mm, and most preferably has the same length as the electrolyte (140); and/or
the cathode (150) has a length of 20 to 40 mm, preferably 30 mm; and/or
the silver current collector (160) has a length of 20 to 40 mm, preferably 30 mm, and most preferably has the same length as the cathode (150).
